# EUROPEAN PATENT APPLICATION

(11) **EP 3 813 445 A1**
(43) Date of publication of application: **28.04.2021**
(21) Application number: 19808439.4
(22) Date of filing: 22.05.2019
(51) Int. Cl.: H04W 56/00, H04W 72/04

(54) **USER TERMINAL AND WIRELESS COMMUNICATION METHOD**

(30) Priority: 23.05.2018 JP 2018110696
(71) Applicant: NTT DoCoMo, Inc., Tokyo 100-6150 (JP)
(72) Inventor: TAKEDA, Kazuaki, Tokyo 100-6150 (JP); NAGATA, Satoshi, Tokyo 100-6150 (JP)
(74) Representative: Hoffmann Eitle
(86) International application number: PCT/JP2019/020299
(87) International publication number: WO 2019/225657

(57) **Abstract**

A user terminal includes a receiving section that receives a reference signal different from a cell-specific reference signal and a narrowband reference signal, based on a second communication requirement of a second bandwidth that is narrower than a first bandwidth of a first communication requirement, and a control section that performs tracking, based on the reference signal. According to an aspect of the present disclosure, it is possible to appropriately perform communication even without using a certain reference signal in communication that satisfies a certain communication requirement.

## Description

### Technical Field

The present invention relates to a user terminal and a radio communication method in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency, and so on (see Non-Patent Literature 1). In addition, for the purpose of achieving broadbandization and increased speed beyond LTE, successor systems of LTE (also referred to as, for example, "LTA-A (LTE-Advanced)," "FRA (Future Radio Access)," "4G," "5G," "5G+ (plus)," "NR (New RAT)," "3GPP (3rd Generation Partnership Project) Rel. 14," "3GPP Rel. 15," "3GPP Rel. 16" (or later versions), and so on) are also under study.

For example, in Rel. 13, user terminals (UE (User Equipment)) that communicate in a narrow band, such as eMTC (enhanced Machine Type Communication, LTE-M (Machine)), and NB-IoT (Narrowband-Internet of Things) are supported.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel. 15 (also referred to as "5G," "NR," or the like), design of user terminals is advanced by assuming a high-speed and large-capacity use case (for example, eMBB (enhanced Mobile Broad Band)) and an ultra-reliable and low-latency use case (for example, URLLC (Ultra Reliable and Low Latency Communications)).

In contrast, in narrowband communication such as LTE-M (eMTC) and NB-IoT, it is also considered to implement functions of an eMTC terminal and an NB-IoT terminal without using a certain reference signal among existing reference signals. In this case, if a terminal does not operate by using an appropriate signal, system performance may be decreased.

The present invention has been made in view of this respect, and an object of the present invention is to provide a user terminal and a radio communication method that appropriately perform communication even without using a certain reference signal in communication that satisfies a certain communication requirement.

### Solution to Problem

A user terminal according to one aspect of the present invention includes a receiving section that receives a reference signal different from a cell-specific reference signal and a narrowband reference signal, based on a second communication requirement of a second bandwidth that is narrower than a first bandwidth of a first communication requirement, and a control section that performs tracking, based on the reference signal. Advantageous Effects of Invention

According to the present invention, it is possible to appropriately perform communication even without using a certain reference signal in communication that satisfies a certain communication requirement.

### Brief Description of Drawings

FIG. 1 is a diagram to show an example of bandwidths of LTE-M (eMTC) and NB-IoT;
FIG. 2 is a diagram to show an example of an initial access;
FIG. 3 is a diagram to show an example of a schematic structure of a radio communication system according to the present embodiment;
FIG. 4 is a diagram to show an example of an overall structure of a radio base station according to the present embodiment;
FIG. 5 is a diagram to show an example of a functional structure of the radio base station according to the present embodiment;
FIG. 6 is a diagram to show an example of an overall structure of a user terminal according to the present embodiment;
FIG. 7 is a diagram to show an example of a functional structure of the user terminal according to the present embodiment; and
FIG. 8 is a diagram to show an example of a hardware structure of the radio base station and the user terminal according the present embodiment.

### Description of Embodiments

For future radio communication systems (for example, Rel. 15 or later versions), it is studied to support a channel bandwidth of 400 MHz at maximum in a frequency band higher than 6 GHz and support a channel bandwidth of 100 MHz at maximum in a frequency band lower than 6 GHz.

Here, a channel bandwidth is a frequency bandwidth that includes a transmission bandwidth constituted of one or more resource blocks (physical resource blocks (PRBs)) (also referred to as a "transmission bandwidth configuration," "N_{RB}" and the like) and guard bands provided to the respective edges of the transmission bandwidth. The channel bandwidth may be referred to as a "system bandwidth," a "transmission bandwidth," simply a "frequency band," and the like. At least one of uplink communication and downlink communication can be performed by using at least one active RB in the transmission bandwidth in the channel bandwidth.

It is assumed that the channel bandwidth of each radio base station (for example, a gNB (gNodeB), also referred to simply as a "base station") (BS channel bandwidth) is processed by a simple RF (Radio Frequency) chain (also referred to as an "RF carrier," a "transmitting/receiving section," an "RF processing section," and the like).

In contrast, the channel bandwidth of each user terminal (for example, UE (User Equipment)) (UE channel bandwidth) may be processed by a single RF chain (also referred to as an "RF carrier," a "transmitting/receiving section," an "RF processing section," and the like) or may be processed by using a plurality of RF chains. For example, in a case of using a plurality of RF chains, the plurality of RF chains may correspond to respective bands partially different from each other in the UE channel bandwidth.

In a case of using a plurality of RF chains, a baseband signal processing section of the user terminal may implement the channel bandwidth by aggregating a plurality of CCs (carrier aggregation (CA) or intra-band CA) by using the band of one RF chain as one component carrier (CC) (also referred to as a "carrier," a "cell," or the like). Alternatively, the baseband signal processing section may implement the channel bandwidth by combining the bands of a plurality of RF chains as one CC.

Capability information of the user terminal related to such an RF chain may be informed as UE capability from the user terminal to the radio base station. The radio base station can simultaneously communicate with a plurality of user terminals having the same and/or different channel bandwidths.

It is also studied, for IoT services, to simplify the hardware structure of UE by allowing a decrease in processing capability. For example, it is studied for a terminal for LTE-M (also referred to as an "eMTC (enhanced MTC)") to adopt a decrease in peak rate, restriction of transport block size (TBS), restriction of resource block (RB) (also referred to as "PRB (Physical Resource Block)" and the like), restriction of reception RF (Radio Frequency), and the like, in comparison with existing user terminals (for example, LTE terminals based on Rel. 12 or previous versions).

Also studied are communication services of terminals only having transmitting/receiving capability of LTE communication in an even narrower band than that for eMTC terminals (for example, also referred to as "NB-IoT (Narrow Band IoT)").

Different from LTE terminals with the upper limit of a band to be used being configured to a system band (for example, 20 MHz (100 RBs), one component carrier, or the like), the upper limit of a band to be used for eMTC terminals and NB-IoT terminals is limited to a certain narrow band (NB). The NB may be six consecutive PRBs that do not overlap in the frequency domain. For example, the NB may be the same as the minimum system band (for example, 1.4 MHz or six PRBs) of existing LTE systems (LTE systems based on Rel. 12 or previous versions) or correspond to part of the band (for example, 180 kHz or one PRB). It is studied, for example, to use six PRBs in eMTC and one PRB in NB-IoT as a narrow bandwidth, but the narrow bandwidth is not limited thereto.

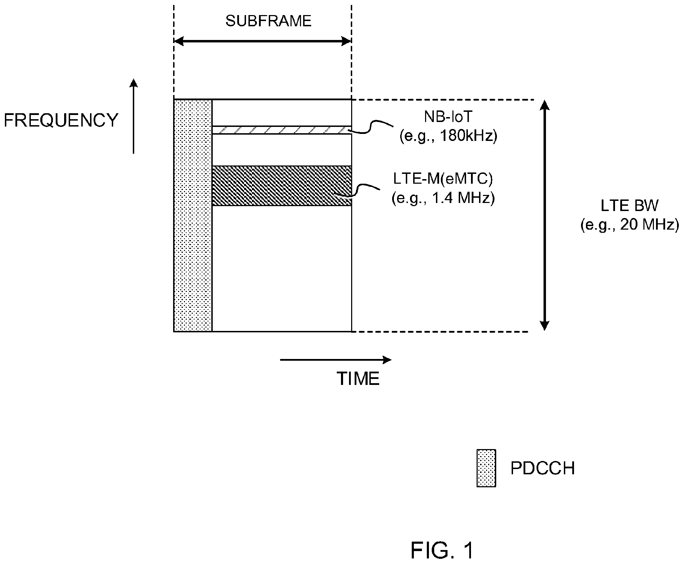

For example, as shown in FIG. 1, it may be assumed for an eMTC terminal to have a channel bandwidth of 1.4 MHz (transmission bandwidth of 1.08 MHz) and a peak data rate of 1 Mbps. The LTE-M (eMTC) terminal may also be referred to as a "category (Cat) M1," "Cat M2," or the like.

It may be assumed for an NB-IoT terminal to have a channel bandwidth of 200 kHz (transmission bandwidth of 180 kHz) and a peak data rate of 250 kbps. The NB-IoT terminal may also be referred to as a "category (Cat) NB1," "Cat NB2," or the like.

The LTE-M (eMTC) and the NB-IoT may be referred to as LPWAs (Low Power Wide Areas).

A user terminal including an eMTC terminal may receive an SS (Synchronization Signal) and a PBCH transmitted at 1.4 MHz (six PRBs) from the center frequency of a cell, receive SIBs (System Information Blocks) at 1.4 MHz, based on MIBs (Master Information Blocks) transmitted on the PBCH, and initiate a random access procedure, based on the SIBs. The SS may include a PSS (Primary Synchronization Signal) and an SSS (Secondary Synchronization Signal).

In contrast, the NB-IoT terminal cannot detect the PSS, SSS, and PBCH transmitted at 1.4 MHz (six PRBs). Hence, a primary synchronization signal (NPSS), a secondary synchronization signal (NSSS), and broadcast channel (NPBCH) for an NB-IoT terminal may be transmitted at 180 kHz (one PRB). For example, the NPSS and the NPBCH may be transmitted at a 10 subframe period, and the NSSS may be transmitted at a 20 subframe period.

Thus, in the existing LTE systems (for example, Rel. 13), the NB-IoT terminal may receive an NSS (Narrowband Synchronization Signal) and an NPBCH (Narrowband Physical Broadcast Channel) for an NB-IoT terminal, receive SIBs at 180 kHz (one PRB), based on MIBs transmitted on the NPBCH, and initiate the random access procedure, based on the SIBs. In the random access procedure, the NB-IoT terminal may transmit an NPRACH preamble by using subcarriers having subcarrier spacing of 3.75 kHz.

The NSS may include an NPSS (Narrowband Primary Synchronization Signal) and an NSSS (Narrowband Secondary Synchronization Signal). The NB-IoT terminal may assume that, in an anchor carrier, an NSS, an NPBCH, and SIB (System Information Block)-NB (Narrowband) (or an SIB-BR (Bandwidth Reduced)) are transmitted. The NB-IoT terminal may determine a narrowband cell ID (NCellID), based on the NSS. The NPBCH may include MIB (Master Information Block)-NB (or MIB-BR). The NPBCH may be transmitted for 640 ms. The NPBCH may be time-multiplexed or frequency-multiplexed with the NRS and the CRS. The NRS may be time-multiplexed with the CRS. SIB1-BR may be information for access to a cell, cell selection, and scheduling of other SIBs, among SIB-BRs.

The user terminal of LTE-M (eMTC) (LTE-M terminal or LTE-M UE) and the user terminal of NB-IoT (NB-IoT terminal or NB-IoT UE) perform measurement, tracking, demodulation, and the like by using a CRS (cell specific reference signal) or an NRS (Narrowband Reference Signal). For example, the LTE-M terminal may perform measurement, tracking, demodulation, and the like by using a CRS. For example, the NB-IoT terminal may perform measurement, tracking, demodulation, and the like by using an NRS.

Each of the CRS and NRS may be transmitted in all slots (all subframes) and through several antenna ports.

Since the user terminal performs tracking even when there is no data transmission, transmission of the CRS or the NRS cannot be stopped. When there is no transmission of the CRS or the NRS, system performance may deteriorate.

In view of this, the inventors of the present invention came up with the idea of implementing a certain communication requirement even without using an existing reference signal. The certain communication requirement may be at least one of LTE-M (eMTC) and NB-IoT. The existing reference signal may be at least one of the CRS and the NRS.

Embodiments according to the present disclosure will be described in detail with reference to the drawings as follows. The radio communication method according to each embodiment may be employed independently or may be employed in combination.

Each aspect may be applied to at least one of LTE-M (eMTC) and NB-IoT or may be applied to another category (communication requirement). The bandwidth of the category may be narrower than the bandwidth of a certain category such as LTE or eMBB.

A TRS (Tracking Reference Signal) may be interpreted as a "PTRS (Phase Tracking Reference Signal)."

### (Aspect 1)

At least one of an LTE-M terminal and an NB-IoT terminal may perform tracking (synchronization tracking, phase tracking, and the like) by using at least one of a TRS and a CSI-RS (Channel State Information-Reference Signal) of NR.

At least one of aspects 1-1 and 1-2 below may be supported.

### <Aspect 1-1>

At least one of the LTE-M terminal and the NB-IoT terminal may not necessarily use at least one of the CRS and the NRS for tracking.

At least one of the LTE-M terminal and the NB-IoT terminal may assume that at least one of the CRS and the NRS is not transmitted. For example, the LTE-M terminal may assume that the CRS is not transmitted. For example, the NB-IoT terminal may assume that the NRS is not transmitted.

At least one reference signal to be used for tracking among the TRS and the CSI-RS may be configured or switched (reconfigured) by a higher layer (for example, a higher layer parameter or RRC signaling) for at least one of the LTE-M terminal and the NB-IoT terminal.

The radio base station may not necessarily transmit at least one of the CRS and the NRS not to be used for tracking. In this case, frequency usage efficiency can be increased.

### <Aspect 1-2>

At least one of the LTE-M terminal and the NB-IoT terminal may use at least one of the CRS and the NRS for tracking.

At least one of the LTE-M terminal and the NB-IoT terminal may perform tracking by using the CRS in addition to at least one of the TRS and the CSI-RS of NR. For example, the LTE-M terminal may perform tracking by using at least one of the TRS and the CSI-RS, and the CRS. For example, the NB-IoT terminal may perform tracking by using at least one of the TRS and the CSI-RS, and the NRS.

At least one reference signal to be used for tracking among the TRS, the CSI-RS, and the CRS may be configured or switched (reconfigured) by a higher layer (for example, a higher layer parameter or RRC signaling) for at least one of the LTE-M terminal and the NB-IoT terminal.

The radio base station may reduce at least one resource of the CRS and the NRS not to be used for tracking or may not necessarily transmit at least one of the CRS and the NRS not to be used for tracking. In this case, frequency usage efficiency can be increased.

Moreover, at least one of the LTE-M terminal and the NB-IoT terminal performs tracking by using at least one of the CRS and the NRS, and at least one of the TRS and the CSI-RS, which can increase accuracy in tracking. The radio base station switches a reference signal to be used for tracking by a higher layer to thereby flexibly configure a resource of each reference signal and tracking performance.

### (Aspect 2)

The LTE-M terminal and the NB-IoT terminal may receive a certain synchronization signal and a certain broadcast channel and perform an initial access by using the certain synchronization signal and the certain broadcast channel. In the period of the initial access, at least one of the LTE-M terminal and the NB-IoT terminal may perform synchronization and tracking by using the certain synchronization signal and the certain broadcast channel.

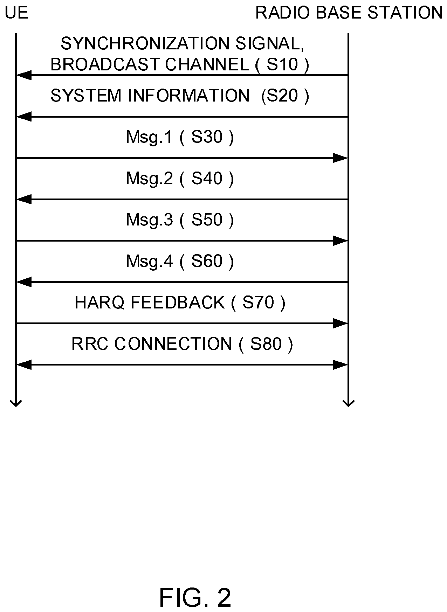

The LTE-M terminal and the NB-IoT terminal may perform such an initial access as that in FIG. 2. First, a UE receives a synchronization signal (SS or NSS) and a broadcast channel (PBCH or NPBCH) (S10). The UE may establish DL synchronization by the synchronization signal.

Subsequently, the UE receives system information (SIB1 or SIB1-BR) (S20). The system information may include a PRACH (Physical Random Access Channel) configuration for a RACH procedure. The UE thereafter performs a random access procedure by using the PRACH configuration.

Subsequently, the UE transmits message 1 (Msg. 1, PRACH, or random access preamble), based on the PRACH configuration (S30).

The UE thereafter receives message 2 (Msg. 2, random access response (RAR), or RAR grant) (S40). Msg. 2 may include timing advance (TA) and UL resource allocation. The UE may establish UL synchronization, based on the TA.

Subsequently, the UE transmits message 3 (Msg. 3, higher layer (L2/L3) control message), based on Msg. 2 (S50). Msg. 3 may include an identifier (for example, C (Cell)-RNTI (Radio Network Temporary Identifier)) of the user terminal and the like.

The UE thereafter receives message 4 (Msg. 4, contention resolution message) (S60). Msg. 4 may be transmitted on a PDSCH. The UE that has successfully detected Msg. 4 transmits an HARQ-ACK for Msg. 4 (S70) and changes from an RRC idling state to an RRC connected state (S80). The HARQ-ACK for Msg. 4 may be transmitted on a PUCCH.

At least one of aspects 2-1 and 2-2 below may be supported.

### <Aspect 2-1>

The NB-IoT terminal may perform an initial access by using the NSS and the NPBCH. In the period of the initial access, the NB-IoT terminal may perform synchronization and tracking by using the NSS and the NRS on the NPBCH.

For the NB-IoT terminal to perform an initial access, at least one reference signal to be used for tracking after the initial access (after a connection is established) among the TRS, the CSI-RS, and the CRS may be specified (configured) by at least one of the NPBCH, the SIB1-BR, and SI (system information).

### <Aspect 2-2>

The LTE-M (eMTC) terminal may perform an initial access by using an LTE SS (synchronization signal, or PSS (Primary Synchronization Signal) and SSS (Secondary Synchronization Signal)) and the PBCH. In the period of the initial access, the LTE-M (eMTC) terminal may perform synchronization and tracking by using the SS and the CRS on the PBCH.

For the NB-IoT terminal to perform an initial access, at least one reference signal to be used for tracking after the initial access (during the RRC connection or after the RRC connection is established) among the TRS, the CSI-RS, and the CRS may be specified (configured) by at least one of the PBCH, the SIB1, and the SI.

The radio base station may reduce at least one resource of the CRS and the NRS or may not necessarily transmit at least one of the CRS and the NRS not used for tracking, during the RRC connection. The radio base station may transmit at least one of the CRS and the NRS only during the initial access.

The radio base station configures, for the UE, a reference signal to be used for tracking to thereby flexibly configure a resource of each reference signal and tracking performance.

### (Radio Communication System)

Hereinafter, a structure of a radio communication system according to one embodiment will be described. In this radio communication system, the radio communication method according to each embodiment described above may be used alone or may be used in combination for communication.

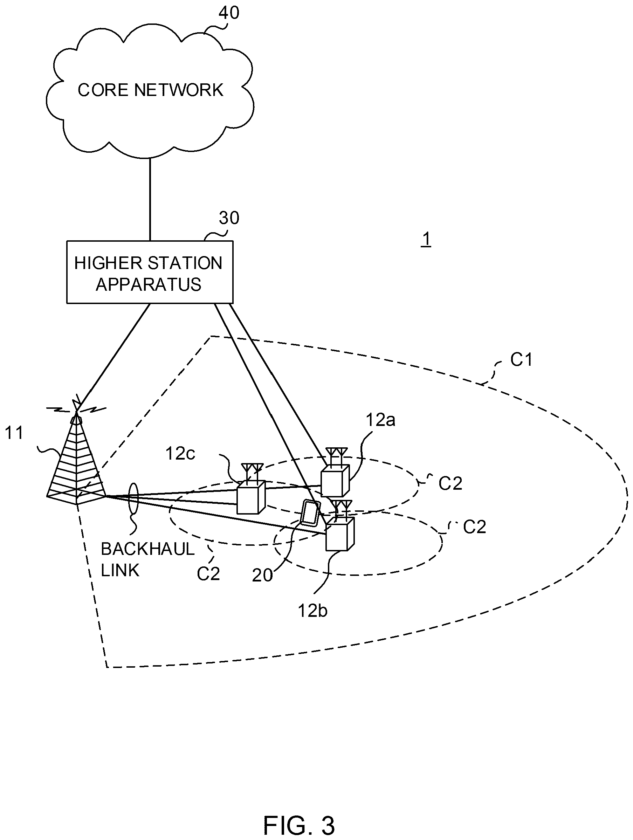

FIG. 3 is a diagram to show an example of a schematic structure of the radio communication system according to one embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 may execute CA or DC by using a plurality of cells (CCs) (for example, five or less CCs or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

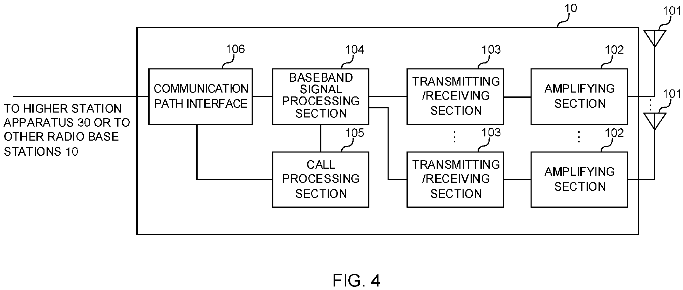

FIG. 4 is a diagram to show an example of an overall structure of the radio base station according to one embodiment. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits, or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (configuring, releasing and so on) for communication channels, manages the state of the radio base station 10, manages the radio resources, and so on.

The communication path interface 106 transmits and/or receives signals to and/or from the higher station apparatus 30 via a certain interface. The communication path interface 106 may transmit and/or receive signals (backhaul signaling) with other radio base stations 10 via an inter-base station interface (for example, an optical fiber in compliance with the CPRI (Common Public Radio Interface) and an X2 interface).

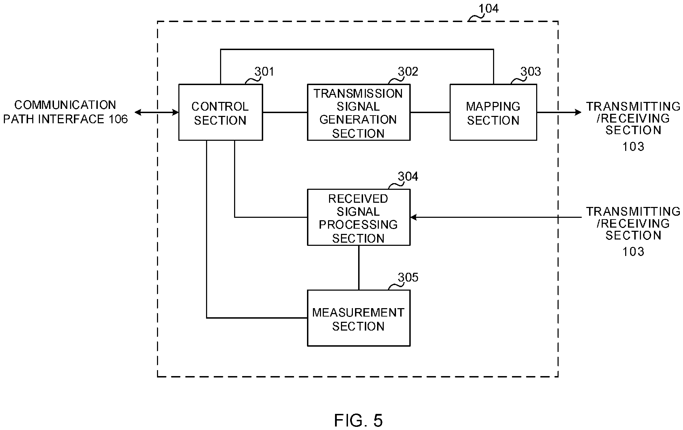

FIG. 5 is a diagram to show an example of a functional structure of the radio base station according to one embodiment. Note that, the present example primarily shows functional blocks that pertain to characteristic parts of the present embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit, or control apparatus that can be described based on general understanding of the technical field to which the present invention pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH, such as transmission confirmation information). Based on the results of determining necessity or not of retransmission control to the uplink data signal, or the like, the control section 301 controls generation of a downlink control signal, a downlink data signal, and so on. The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH, such as transmission confirmation information), a random access preamble (for example, a signal transmitted on the PRACH), an uplink reference signal, and the like.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit, or signal generation apparatus that can be described based on general understanding of the technical field to which the present invention pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit, or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit, or signal processing apparatus that can be described based on general understanding of the technical field to which the present invention pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit, or measurement apparatus that can be described based on general understanding of the technical field to which the present invention pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### (User Terminal)

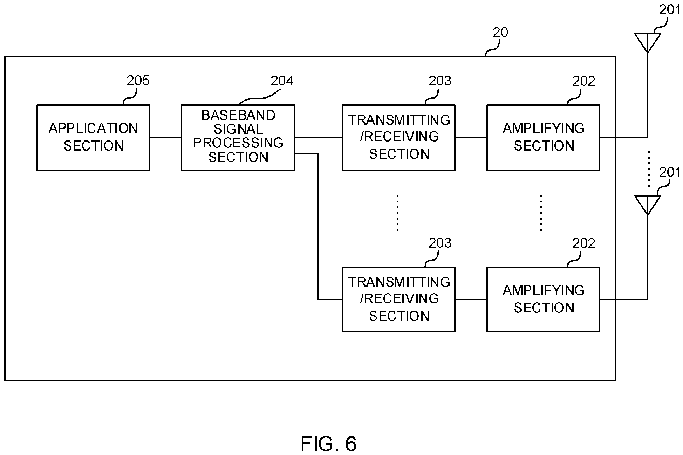

FIG. 6 is a diagram to show an example of an overall structure of a user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits, or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

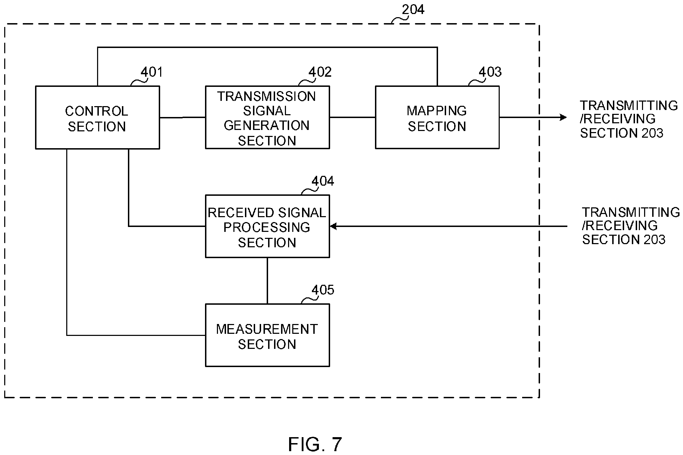

FIG. 7 is a diagram to show an example of a functional structure of a user terminal according to one embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit, or control apparatus that can be described based on general understanding of the technical field to which the present invention pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present invention pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit, or mapping apparatus that can be described based on general understanding of the technical field to which the present invention pertains.

The received signal processing section 404 performs receiving processes (for example, demapping, demodulation, decoding, and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit, or signal processing apparatus that can be described based on general understanding of the technical field to which the present invention pertains. The received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit, or measurement apparatus that can be described based on general understanding of the technical field to which the present invention pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

The transmitting/receiving sections 203 may receive a reference signal different from a cell-specific reference signal (CRS) and a narrowband reference signal (NRS), based on a second communication requirement (for example, LTE-M (eMTC) or NB-IoT) of a second bandwidth that is narrower than a first bandwidth of a first communication requirement (for example, LTE or eMBB). The control section 401 may perform tracking, based on the reference signal.

The control section 401 may perform tracking, based on at least one of at least one of the cell-specific reference signal and the narrowband reference signal, and the reference signal.

The reference signal may be at least one of a tracking reference signal (for example, TRS or PTRS) and a channel state information reference signal (CSI-RS).

At least one downlink signal among the cell-specific reference signal, the narrowband reference signal, and the reference signal may be configured by at least one of a broadcast channel (for example, PBCH or NPBCH), system information (for example, SIB1, SIB1-BR, or SI), and a higher layer (for example, higher layer parameter or RRC signaling), and the control section 401 may perform tracking, based on the downlink signal being configured.

The control section 401 may perform tracking, based on at least one of the cell-specific reference signal and the narrowband reference signal during an initial access, and perform tracking, based on the downlink signal being configured, after the initial access (for example, during an RRC connection or after an RRC connection is established).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus.

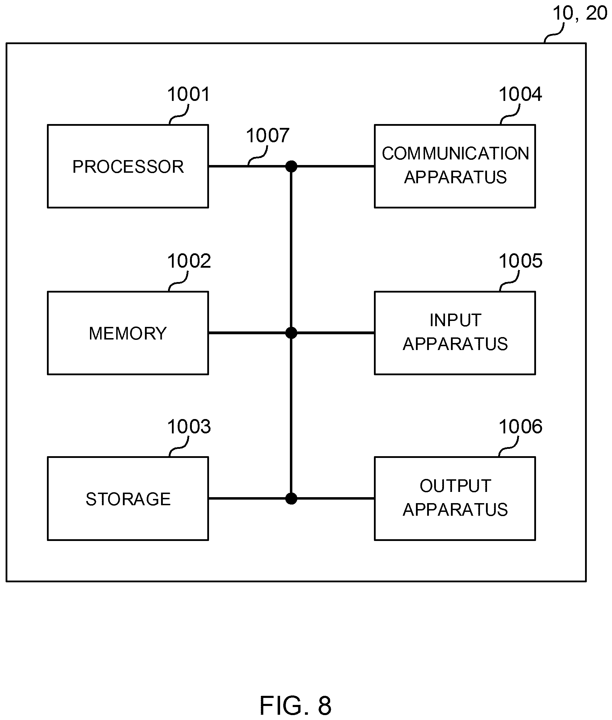

For example, a radio base station, a user terminal, and so on according to one embodiment of the present disclosure may function as a computer that executes the processes of the radio communication method of the present disclosure. FIG. 8 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, at least one of "channels" and "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH and a PUSCH transmitted in a time unit larger than a mini-slot may be referred to as "PDSCH/PUSCH mapping type A." A PDSCH and a PUSCH transmitted using a mini-slot may be referred to as "PDSCH/PUSCH mapping type B."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG)," a "PRB pair," an "RB pair," and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," a "bandwidth part (BWP)" and so on can be used interchangeably. The base station may be referred to as the terms such as a "macro cell," a small cell," a "femto cell," a "pico cell," and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as "transmitting apparatus," "receiving apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation.

Furthermore, the radio base station in the present disclosure may be interpreted as a user terminal. For example, each aspect/embodiment of the present disclosure may be applied to the structure that replaces a communication between a radio base station and a user terminal with a communication between a plurality of user terminals (for example, which may be referred to as "D2D (Device-to-Device)," "V2X (Vehicle-to-Everything)," and the like). In this case, the user terminals 20 may have the functions of the radio base stations 10 described above. The words "uplink" and "downlink" may be interpreted as the words corresponding to the terminal-to-terminal communication (for example, "side"). For example, an uplink channel may be interpreted as a side channel.

Likewise, the user terminal in the present disclosure may be interpreted as a radio base station. In this case, the radio base stations 10 may have the functions of the user terminals 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although the methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, next-generation systems that are enhanced based on these, and so on. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure may encompass a wide variety of actions. For example, "judging (determining)" may be interpreted to mean making "judgments (determinations)" about judging, calculating, computing, processing, deriving, investigating, looking up (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables, printed electrical connections, and so on, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." The terms "separate," "be coupled" and so on may be interpreted similarly.

When terms such as "include," "including," and variations of these are used in the present disclosure or in claims, these terms are intended to be inclusive, in a manner similar to the way the term "comprising" is used. Furthermore, the term "or" as used in the present disclosure or in claims is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on JP 2018-110696 filed on May 23, 2018. The entire contents of JP 2018-110696 are incorporated herein.

## Claims

1. A user terminal comprising:
a receiving section that receives a reference signal different from a cell-specific reference signal and a narrowband reference signal, based on a second communication requirement of a second bandwidth that is narrower than a first bandwidth of a first communication requirement; and
a control section that performs tracking, based on the reference signal.

2. The user terminal according to claim 1, wherein
the control section performs tracking, based on at least one of at least one of the cell-specific reference signal and the narrowband reference signal and the reference signal.

3. The user terminal according to claim 1 or 2, wherein
the reference signal is at least one of a tracking reference signal and a channel state information reference signal.

4. The user terminal according to any one of claims 1 to 3, wherein
at least one downlink signal among the cell-specific reference signal, the narrowband reference signal, and the reference signal is configured by at least one of a broadcast channel, system information, and a higher layer, and
the control section performs tracking, based on the downlink signal being configured.

5. The user terminal according to claim 4, wherein
the control section performs tracking, based on at least one of the cell-specific reference signal and the narrowband reference signal during an initial access, and performs tracking, based on the downlink signal being configured, after the initial access.

6. A radio communication method of a user terminal, the radio communication method comprising:
receiving a reference signal different from a cell-specific reference signal and a narrowband reference signal, based on a second communication requirement of a second bandwidth that is narrower than a first bandwidth of a first communication requirement; and
performing tracking, based on the reference signal.
